# EUROPEAN PATENT APPLICATION

(11) **EP 1 340 890 A1**
(43) Date of publication of application: **03.09.2003**
(21) Application number: 02425111.8
(22) Date of filing: 28.02.2002
(51) Int. Cl.: F01N 3/28, F01N 3/20

(54) **A device for reducing the atmospheric pollution due to exhaust gas**

(71) Applicant: Pellegrino, Luigi, 10090 Rivalba (IT)
(72) Inventor: Tenci, Pier Luigi, 10099 San Mauro Torinese (Torino) (IT); Pellegrino, Luigi, 10099 San Mauro Torinese (Torino) (IT)
(74) Representative: Marchitelli, Mauro

(57) **Abstract**

A device for reducing atmospheric pollution due to exhaust gases and to the engine gas itself that is recirculated at intake, comprising a casing (12), which has an inlet section (16) and an outlet section (18), and a catalytic cartridge (24) housed inside the casing (12) and set between the inlet section (16) and the outlet section (18), in which the catalytic cartridge (24) comprises at least one layer (67) of mineral fibres, the chemical composition of which comprises at least 70 wt% of silica (SiO₂) and at least one noble metal chosen in the group comprising platinum, rhodium, iridium and palladium. The layer of catalytic fibres (67) has an undulated arrangement so as to present to the exhaust gas the largest surface exposed orthogonally to the direction of flow of the gas.

## Description

The present invention relates to a device for reducing atmospheric pollution due to exhaust gases, according to the preamble of the main claim.

The present invention has been developed for reducing atmospheric pollution due to the exhaust gases produced by internal-combustion engines and to the engine gas itself that is recirculated at intake, in particular in diesel engines. The invention finds, in any case, useful application also for the treatment of exhaust gases of a different type, such as the ones produced by heating systems for industrial, commercial and residential use.

As is known, in exhaust gases produced by internal-combustion engines, and in particular by diesel engines, there are present, in varying amounts, polluting substances, such as carbon particulate, unburnt hydrocarbons, nitrogen oxides, carbon oxides, etc.

Numerous systems and devices have been designed for reducing the content of pollutants in exhaust gases of internal-combustion engines, and in particular for reducing the content of carbon particles (particulate) and unburnt hydrocarbons. The document EP-A-1123728 describes a device according to the preamble of the main claim, comprising a cylindrical casing provided with an inlet for the exhaust gases to be purified, an outlet for the exhaust gases that have been purified, and a tubular cartridge housed inside the casing and set between the inlet and the outlet. The cartridge comprises mineral fibres of a catalytic material, the chemical composition of which comprises at least 70 wt% of silica (SiO₂ and at least one of the following metals: platinum, rhodium and palladium. The cartridge of the device described in EP-A-1123728 is formed starting from a pad including a layer of fibres which is set, in sandwich fashion, between two meshes of thin steel wire. The said pad is wound in a spiral in such a way as to form an annular cartridge in which, in a cross section in a plane orthogonal to the longitudinal axis of the cartridge, in the radial direction there is an alternation of layers of fibres and layers of woven filiform material formed by the thin-steel-wire meshes.

Experimental tests and analyses have shown that the composition of the catalytic material described in the document EP-A-1123728 is particularly effective for obtaining conversion of carbon and unburnt hydrocarbons into carbon dioxide and water. In particular, the composition of the catalytic material described in the aforesaid document affords the advantage of enabling catalysis at relatively low temperatures (in the region of 200°C). The solution described in the document EP-A-1123728 has enabled excellent results to be achieved as regards the percentages of abatement of pollutant substances in exhaust gases, especially as regards particulate and unburnt hydrocarbons, but it has been found that the solution known from the above document does not enable total abatement of carbon particles.

The purpose of the present invention is to provide an improved solution that will enable a further increase in the percentages of abatement of the polluting substances and that will enable the content of carbon particles in the purified exhaust gas to be brought as close as possible to zero.

In accordance with the present invention, the above purpose is achieved by a device having the characteristics that form the subject of the main claim.

The advantages of the present invention will emerge clearly from the ensuing detailed description, which is provided purely by way of non-limiting example, in which:
- Figure 1 is a schematic axial cross section of a device according to the present invention;
- Figure 2 is a section, taken along the line II-II, of the cartridge of catalytic material used in the device according to the present invention; and
- Figure 3 is a view at a larger scale of the detail circled in Figure 2.

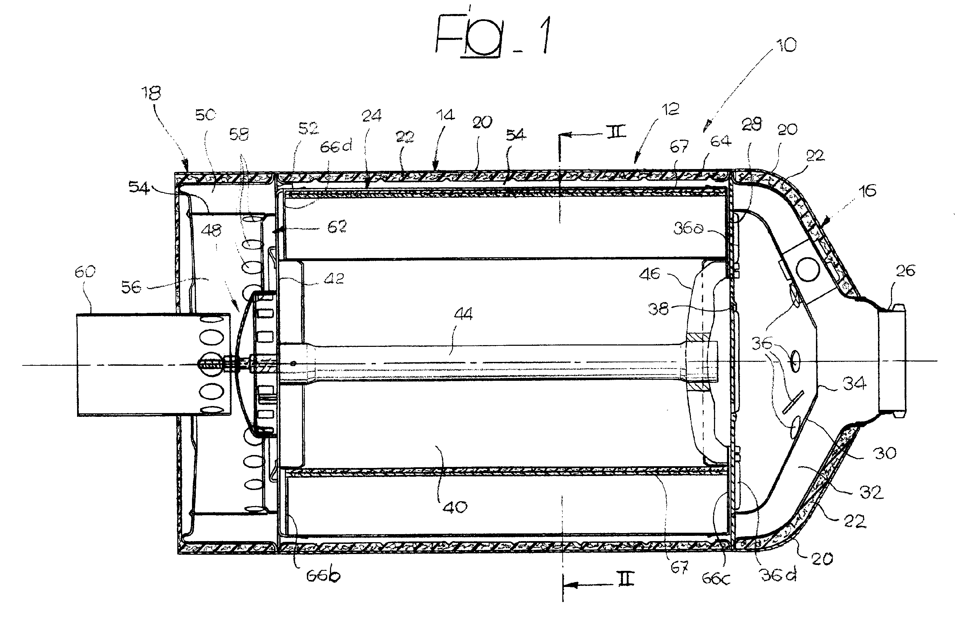

With reference to Figure 1, number 10 designates a device for reducing the content of pollutants in a flow of exhaust gases. Figure 1 is a schematic representation of a device that may be applied to the exhaust system of a lorry or a bus with a diesel engine; however, it is understood that the shape and dimensions of the device according to the present invention may be modified to adapt them to vehicles of a different type, such as motor vehicles, earth-moving machinery, generator sets, steam rollers, and lift trucks, or else to heating systems for industrial, commercial or residential use. The device 10 comprises a casing 12 which has a central portion 14, for example cylindrical in shape, a section 16 for intake of the gas that is to be purified, and a section 18 for outlet of the gas that has been purified. The casing 12 preferably comprises one or more sheets of metal 20 and a layer of thermally insulating material 22.

A catalytic cartridge 24 is housed in the central body 14 of the casing 12. In the embodiment illustrated in the figures, the cartridge 24 has a tubular shape, but it is understood that the said cartridge may have a different shape, for instance plane, elliptical or square. In the example of embodiment illustrated in the figures, the device 10 is built in such a way that, during operation, the cartridge 24 is traversed by the gases in the radial direction from inside outwards; however, falling within the scope of the present invention is a device in which the cartridge 14 is traversed by the gases in the radial direction from outside inwards.

The inlet section 16 of the device 10 has an inlet duct 26 for intake of the gas and terminates with a radial wall 28 fixed to the casing 12. From the radial wall 28 there projects a substantially conical wall 30, which forms, together with the wall of the section 16, a chamber 32 for conditioning the flow of gas. The conical wall 30 has a central opening 34 and a series of holes 36 and slits 36a. The radial wall 28 is provided with a hole 38 which sets the inlet section 16 in communication with the internal space 40 of the cartridge 24.

The cartridge 24 carries at its front end (on the left, in Figure 1) a plate 42 which is connected to a fixing tie rod 44 that engages at its end (on the right, in Figure 1) a bracket 46 fixed to the radial wall 28. The plate 42 carries a thermal by-pass device 48 which sets in direct communication together the gas-outlet section 18 and the internal part 40 of the cartridge 24 when the temperature of the gas is lower than a temperature at which the catalyst starts working. The thermal by-pass device 48 may be equipped with bimetallic sensor elements calibrated at a temperature of approximately 120-180°C. When the temperature of the gas exceeds the calibration threshold of the thermal by-pass device 48, the device 48 closes the openings for communication between the internal part 40 of the cartridge 24 and the outlet section 18. The aforesaid by-pass device constitutes a thermoregulator that guarantees long working life of the catalytic cartridge because it prevents deposition, on the cartridge, of unburnt oil and carbon particles at starting of the engine.

The outlet section 18 has a header chamber 50 which communicates, by means of an annular opening 52, with the cartridge 24, and through which there flows the purified gas that has passed through the catalytic cartridge. The outlet section 18 has an annular wall 54 which defines, within it, a receiver 56 which communicates with the header chamber 50 by means of a series of holes. The receiver 56 communicates with an outlet pipe 60. There may moreover be provided a constant-pressure by-pass device 62, which sets in direct communication the outlet section 18 and the internal part 40 of the cartridge 24 when the pressure of the gas inside the cartridge exceeds a pre-set threshold. The constant-pressure by-pass device 62 may be formed by a series of by-pass holes closed by leaf valves that open when the pressure of the gas exceeds the calibration value. The said leaf valves protect the catalytic cartridge in the case where the injectors are out of calibration or in the event of failure or malfunctioning of the turbo-supercharger, leakage of water from the cylinder heads, etc.

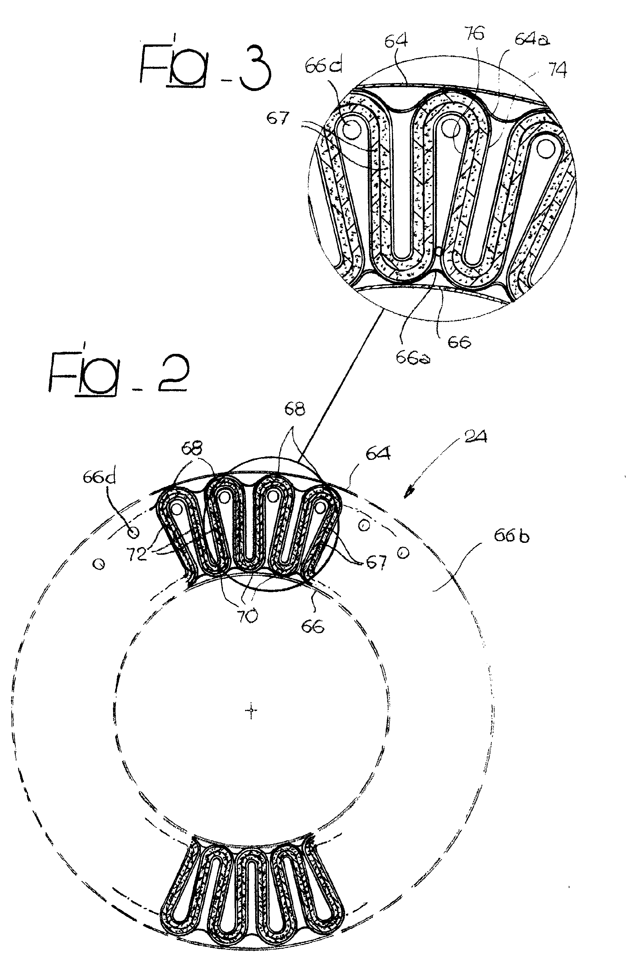

With reference to Figures 2 and 3, the cartridge 24 comprises an external cylindrical mesh 64 and in internal cylindrical mesh 66, which define the outer boundary and the inner boundary, respectively, of the cartridge 24. Alternatively, the meshes 64 and 66 may have an undulated shape, as indicated by the references 64a and 66a in Figure 3. The entire cartridge in contained by the meshes 64 and 66, which form an integral part with front end closing disks 66b and 66c (Figure 1) for hermetic seal and tightening of the cylinder heads. Arranged in the front end closing disk 66b is a series of holes 66d (Figures 2 and 3). The said holes have the task of draining any accumulation of ash at engine starting. Drainage takes place through the holes of the by-pass device 48 when the temperature of the gas is lower than the calibration threshold of the thermal by-pass device 48. In this condition, the holes 66d set the internal space 40 in communication with the receiver 56.

The active material of the catalytic cartridge 24 is made up of one or more layers of mineral fibres 67, made of the same material as the one described in the document EP-A-1123728, namely, mineral fibres, the chemical composition of which comprises at least 70 wt% of silica (SiO₂) and at least one of the following noble metals: platinum in an amount of from 0.0003 to 0.5 g per gram of fibre, rhodium and iridium in an amount of from 0.00003 to 0.05 g per gram of fibre, and palladium in an amount of from 0.00003 to 0.5 g per gram of fibre. In a preferred aspect of the present invention, the silica constituting said layer 67 of catalytic material is coated with at least one noble metal chosen in the group comprising platinum, rhodium, iridium and palladium. As regards the composition and the chemical and physical characteristics of the catalytic material, reference may be made to the description and claims of the document EP-A-1123728. According to the present invention, the catalysed fibres are set in one or more layers, which are preferably needled and are arranged with an undulated or pleated shape; i.e., they are bent or folded in such a way as to form arched portions 68, 70 which are set alternately adjacent to the outer surface 64 and to the inner surface 66 of the cartridge 24. The arched portions 68, 70 of the layer or layers of fibres 67 are connected together by rectilinear portions 72.

The thickness of each needled layer of catalytic fibres 67 may range from 1 to 20 millimetres. The number of the undulations 68, 70 and the length of the joining portions 72 may vary according to the active surface that is to be obtained. The density of the layer or layers of catalytic fibres 67 may range from 20 to 180 kg/m³.

In the example illustrated in Figures 2 and 3, the cartridge 24 comprises two layers 67 joined together, both of which consist of silica fibres coated with a noble metal in the amount specified previously. The silica fibres coated with the aforesaid metal or oxides thereof are needled so as to form the layers 67. The layers 67, joined together, are contained in a stocking made of thin stainless-steel wire and are supported by one or two undulated metal meshes 74, 76 which keep the needled layer 67 in the undulated configuration.

The present invention has stemmed from the realization that the rate of flow of gas through the catalytic material 67 has a determining importance for the purposes of the process of catalysis that converts the carbon particles and the unburnt hydrocarbons contained in the gas into carbon dioxide and water. Experimental tests conducted by the inventors have shown that with rates of flow of the gas through the fibres of less than 1 m/s it is possible to obtain 100% abatement of particulate and unburnt hydrocarbons, guaranteeing a long service life. The undulated shape of the layers of catalytic material makes it possible to obtain a considerable reduction in the rate of passage of gas, given the same dimensions of the cartridge, thanks to the increase in the active surface of the catalytic material. As compared to the solution described in the document EP-A-1123728, the present solution enables a considerable reduction in the thickness of the catalytic material and an increase in the active surface for the purpose of reducing the rate of passage of the gas. Whereas in the solution according to the prior art the cartridge had a very large thickness and an active surface equal to the area of the outer cylindrical surface of the cartridge, in the solution according to the present invention the thickness of the catalytic material is very reduced - namely, it is equal just to the thickness of the needled layers 67 - whilst the area of the active surface is considerably increased. This solution enables unexpected results to be achieved in terms of efficiency of abatement of polluting components contained in exhaust gases, up to total abatement of carbon particles and unburnt hydrocarbons, guaranteeing a long service life. With the solution according to the prior art described in the document EP-A-1123728, high abatement percentages were achieved, but it was not possible to reach percentages of 100% abatement of carbon particles and unburnt hydrocarbons.

## Claims

1. A device for reducing atmospheric pollution due to exhaust gases, comprising a casing (12) having an inlet section (16) and an outlet section (18), and a catalytic cartridge (24) housed inside the casing (12) and set between the inlet section (16) and the outlet section (18), in which the catalytic cartridge (24) comprises at least one layer (67) of mineral fibres, the chemical composition of which comprises at least 70 wt% of silica (SiO₂) and at least one noble metal chosen in the group comprising platinum, rhodium, iridium and palladium, **characterized in that** said layer of catalytic fibres (67) has an undulated arrangement.

2. The device according to Claim 1, **characterized in that** the silica constituting said layer (67) of catalytic material is coated with said noble metal.

3. The device according to Claim 1, **characterized in that** the arrangement of said layer (67) of catalytic material is designed to present to the exhaust gas the largest surface exposed orthogonally to the direction of flow of the gas.

4. The device according to Claim 1, **characterized in that** said layer (67) of catalytic material is formed by needled and/or woven fibres.

5. The device according to Claim 1, **characterised in that** said layer (67) of catalytic material has a thickness ranging from 0.5 to 20 mm.

6. The device according to Claim 1, **characterized in that** said layer (67) of catalytic material has a density ranging from 20 to 180 kg/m³.

7. The device according to Claim 1, **characterized in that** it comprises one or more metal meshes (74, 76) having an undulated shape, between which is set at least one layer (67) of mineral catalytic fibres.

8. The device according to Claim 1, **characterized in that** said layer (67) of catalytic fibres is contained in a stocking made of thin stainless-steel wire.

9. The device according to Claim 1, **characterized in that** it comprises a by-pass device (62), which is calibrated at a constant pressure and is designed to set in direct communication the outlet section (18) and the internal part (40) of the cartridge (24) when the pressure of the exhaust gas exceeds the value of calibration of said by-pass device (62).

10. The device according to Claim 9, **characterized in that** the by-pass device (62) comprises a series of slits associated to calibrated leaf valves which are designed to set in direct communication the outlet section (18) and the internal part (40) of the cartridge (24) when the pressure of the exhaust gas exceeds the value of calibration of said leaf valves.

11. The device according to Claim 1, **characterized in that** it comprises a thermal by-pass device (48) which sets in direct communication together the gas-outlet section (18) and the internal part (40) of the cartridge (24) when the temperature of the exhaust gas is lower than the temperature of operation of said layer of catalytic material (67).

12. The device according to Claim 11,
**characterized in that** it comprises a series of holes (66d) set on a front end closing disk (66b) and set in such a way as to set in communication an internal space (40) of the cartridge (24) with the thermal by-pass device (48).
